# EUROPEAN PATENT SPECIFICATION

(11) **EP 1 682 637 B1**
(45) Date of publication and mention of the grant of the patent: **22.11.2017**
(21) Application number: 04818611.8
(22) Date of filing: 29.10.2004
(51) Int. Cl.: C10G 65/04, B01J 35/00, B01J 23/85

(54) **A HYDROTREATING CATALYST SYSTEM SUITABLE FOR USE IN HYDROTREATING HYDROCARBONACEOUS FEEDSTREAMS**
HYDRIERBEHANDLUNGSKATALYSATORSYSTEM, DAS ZUR VERWENDUNG BEI DER HYDRIERBEHANDLUNG VON KOHLENWASSERSTOFFHALTIGEN EINSATZSTRÖMEN GEEIGNET IST
SYSTÈME CATALYSEUR D'HYDROTRAITEMENT APPROPRIÉ POUR HYDROTRAITER DES FLUX D'ALIMENTATION HYDROCARBONES

(30) Priority: 10.11.2003 US 518739 P; 09.09.2004 US 608448 P
(43) Date of publication of application: 26.07.2006
(73) Proprietor: ExxonMobil Research and Engineering Company, Annandale, NJ 08801-0900 (US)
(72) Inventor: SCHLEICHER, Gary, P., Baton Rouge, LA 70817 (US); RILEY, Kenneth, L., Baton Rouge, LA 70808 (US)
(74) Representative: ExxonMobil Chemical Europe Inc.
(86) International application number: PCT/US2004/036111
(87) International publication number: WO 2005/047433

(56) References cited:
- WO-A-00/42125
- WO-A-00/42131
- US-A- 4 657 663

## Description

### FIELD OF THE INVENTION

This invention relates to a hydrotreating catalyst system suitable for use in hydrotreating hydrocarbonaceous feedstreams. More particularly, the present invention is directed at a stacked bed catalyst system comprising at least one first catalyst selected from conventional hydrotreating catalyst having an average pore diameter of greater than 10 nm and at least one second catalyst comprising a bulk metal hydrotreating catalyst.

### BACKGROUND OF THE INVENTION

Environmental and regulatory initiatives are requiring ever lower levels of both sulfur and aromatics in distillate fuels. For example, proposed sulfur limits for distillate fuels to be marketed in the European Union for the year 2005 is 50 wppm or less. There are also proposed limits that would require lower levels of total aromatics as well as lower levels of multi-ring aromatics found in distillate fuels and heavier hydrocarbon products. Further, the maximum allowable total aromatics level for CARB reference diesel and Swedish Class I diesel are 10 and 5 vol.%, respectively. Further, the CARB reference fuels allows no more than 1.4 vol.% polyaromatics (PNAs). Consequently, much work is presently being done in the hydrotreating art because of these proposed regulations.

Still further, with the advent of increased environmental concerns, the performance requirements for lubricating oil basestocks themselves have also increased. For example, the American Petroleum Institute (API) requirements for Group II basestocks include a saturates content of at least 90%, a sulfur content of 0.03 wt.% or less and a viscosity index (VI) between 80 and 120. Currently, there is a trend in the lube oil market to use Group II basestocks instead of Group I basestocks in order to meet the demand for higher quality basestocks that provide for increased fuel economy, reduced emissions, etc. For example, American Petroleum Institute (API) requirements for Group II basestocks include a saturates content of at least 90%, a sulfur content of 0.03 wt.% or less and a viscosity index (VI) between 80 and 120.

Thus, as the environmental and regulatory initiatives to increase, the search for new and different processes, catalysts, and catalyst systems that exhibit improved sulfur and nitrogen removal and aromatics saturation activity is a continuous, ongoing exercise. Therefore, there is a need to provide hydrocarbonaceous products that meet the demand for increased fuel economy, reduced emissions, etc.

WO 00/42131 discloses a process for hydroprocessing petroleum and chemical feedstocks using bulk Group VIII/Group VIB catalysts and, optionally, a first non-bulk metal hydrotreating catalyst.

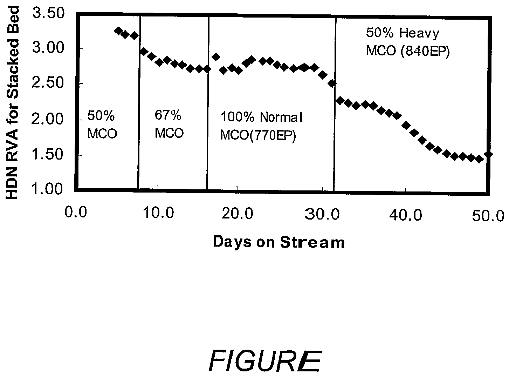

### BRIEF DESCRIPTION OF THE FIGURE

The Figure is a plot of the relative volume activity of various catalysts and catalyst systems versus the days the respective catalysts and catalyst systems were on stream.

### SUMMARY OF THE INVENTION

The present invention is directed at a stacked bed catalyst system suitable for use in the hydrotreating of hydrocarbonaceous feedstocks. The catalyst system comprises:
a) at least one first catalyst selected from hydrotreating catalysts comprised of at least one Group VIII metal and at least one Group VIB metal on a high surface area support material, and having an average pore diameter of greater than 10 nm as measured by water adsorption porosimetry; and
b) at least one second catalyst selected from bulk metal hydrotreating catalysts,
wherein the catalyst system comprises 40-95 vol.% of the first hydrotreating catalyst with the second hydrotreating catalyst comprising the remainder;
and wherein the second catalyst is located downstream of the first catalyst in relation to flow of the feedstock.

### DETAILED DESCRIPTION OF THE INVENTION

It should be noted that the terms "feedstock" and "feedstream" as used herein are synonymous.

The present invention is directed at a stacked bed catalyst system suitable for use in the hydrotreating of hydrocarbonaceous feedstocks. The catalyst system comprises at least one first catalyst selected from conventional hydrotreating catalysts having an average pore diameter of greater than 10 nm and at least one second catalyst selected from bulk metal hydrotreating catalysts. The stacked bed hydrotreating catalyst system is suitable for use in the hydrotreating of hydrocarbonaceous feedstocks.

As stated above, the present invention is a stacked bed catalyst system comprising at least a first and second hydrotreating catalyst. By "stacked bed" it is meant that the first catalyst appears in a separate catalyst bed, reactor, or reaction zone, and the second hydrotreating catalyst appears in a separate catalyst bed, reactor, or reaction zone downstream, in relation to the flow of the lubricating oil feedstock, from the first catalyst.

The first hydrotreating catalyst is a supported catalyst. Suitable hydrotreating catalysts for use as the first catalyst of the present catalyst system include any conventional hydrotreating catalyst. Conventional hydrotreating catalyst as used herein is meant to refer to those which are comprised of at least one Group VIII metal, preferably Fe, Co and Ni, more preferably Co and/or Ni, and most preferably Ni; and at least one Group VIB metal, preferably Mo and W, more preferably Mo, on a high surface area support material, preferably alumina. The Group VIII metal is typically present in an amount ranging from 2 to 20 wt.%, preferably from 4 to 12%. The Group VIB metal will typically be present in an amount ranging from 5 to 50 wt.%, preferably from 10 to 40 wt.%, and more preferably from 20 to 30 wt.%. All metals weight percents are on support. By "on support" we mean that the percents are based on the weight of the support. For example, if the support were to weigh 100 g. then 20 wt.% Group VIII metal would mean that 20 g. of Group VIII metal was on the support.

However, not all conventional hydrotreating catalysts fitting the above-described criteria are suitable for use in the present invention. The inventors hereof have unexpectedly found that the average pore diameter of the first catalyst must have a specific size to be suitable for use herein. Thus, in the practice of the present invention, a conventional catalyst, as described above, but having an average pore diameter greater than 10 nm, as measured by water adsorption porosimetry, must be used as the first catalyst of the present stacked bed catalyst system. It is preferred that the average pore diameter of the first catalyst, i.e. the conventional hydrotreating catalyst, of the present stacked bed catalyst system be greater than 11 nm, more preferably greater than 12 nm.

The second hydrotreating catalyst is a bulk metal catalyst. By bulk metal, it is meant that the catalysts are unsupported wherein the bulk catalyst particles comprise 30 - 100 wt.% of at least one Group VIII non-noble metal and at least one Group VIB metal, based on the total weight of the bulk catalyst particles, calculated as metal oxides and wherein the bulk catalyst particles have a surface area of at least 10 m²/g. It is furthermore preferred that the bulk metal hydrotreating catalysts used herein comprise 50 to 100 wt.%, and even more preferably 70 to 100 wt.%, of at least one Group VIII non-noble metal and at least one Group VIB metal, based on the total weight of the particles, calculated as metal oxides. The amount of Group VIB and Group VIII non-noble metals can easily be determined VIB TEM-EDX.

Bulk catalyst compositions comprising one Group VIII non-noble metal and two Group VIB metals are preferred. It has been found that in this case, the bulk catalyst particles are sintering-resistant. Thus the active surface area of the bulk catalyst particles is maintained during use. The molar ratio of Group VIB to Group VIII non-noble metals ranges generally from 10:1 - 1:10 and preferably from 3:1 - 1:3. In the case of a core-shell structured particle, these ratios of course apply to the metals contained in the shell. If more than one Group VIB metal is contained in the bulk catalyst particles, the ratio of the different Group VIB metals is generally not critical. The same holds when more than one Group VIII non-noble metal is applied. In the case where molybdenum and tungsten are present as Group VIB metals, the molybenum:tungsten ratio preferably lies in the range of 9:1 -1:9. Preferably the Group VIII non-noble metal comprises nickel and/or cobalt. It is further preferred that the Group VIB metal comprises a combination of molybdenum and tungsten. Preferably, combinations of nickel/molybdenum/tungsten and cobalt/molybdenum/tungsten and nickel/cobalt/molybdenum/tungsten are used. These types of precipitates appear to be sinter-resistant. Thus, the active surface area of the precipitate is remained during use. The metals are preferably present as oxidic compounds of the corresponding metals, or if the catalyst composition has been sulfided, sulfidic compounds of the corresponding metals.

It is also preferred that the bulk metal hydrotreating catalysts used herein have a surface area of at least 50 m²/g and more preferably of at least 100 m²/g. It is also desired that the pore size distribution of the bulk metal hydrotreating catalysts be approximately the same as the one of conventional hydrotreating catalysts. More in particular, these bulk metal hydrotreating catalysts have preferably a pore volume of 0.05 - 5 ml/g, more preferably of 0.1 - 4 ml/g, still more preferably of 0.1 - 3 ml/g and most preferably 0.1 - 2 ml/g determined by nitrogen adsorption. Preferably, pores smaller than 1 nm are not present. Furthermore these bulk metal hydrotreating catalysts preferably have a median diameter of at least 50 nm, more preferably at least 100 nm, and preferably not more than 5000 µm and more preferably not more than 3000 µm. Even more preferably, the median particle diameter lies in the range of 0.1 - 50 µm and most preferably in the range of 0.5-50 µm.

The reaction stage containing the stacked bed hydrotreating catalyst system used in the present invention can be comprised of one or more fixed bed reactors or reaction zones each of which can comprise one or more catalyst beds of the same or different catalyst. Although other types of catalyst beds can be used, fixed beds are preferred. Such other types of catalyst beds include fluidized beds, ebullating beds, slurry beds, and moving beds. Interstage cooling or heating between reactors, reaction zones, or between catalyst beds in the same reactor, can be employed since some olefin saturation can take place, and olefin saturation and the desulfurization reaction are generally exothermic. A portion of the heat generated during hydrotreating can be recovered. Where this heat recovery option is not available, conventional cooling may be performed through cooling utilities such as cooling water or air, or through use of a hydrogen quench stream. In this manner, optimum reaction temperatures can be more easily maintained.

The stacked bed catalyst system of the present invention comprises 40-95 vol.% of the first catalyst with the second catalyst comprising the remainder, preferably 40-60 vol.%. Thus, if the catalyst system comprises 50 vol.% of the first catalyst, the second catalyst will comprise 50 vol.% also.

As stated above, the present catalyst system is suitable for use in the hydrotreating of hydrocarbonaceous feedstreams. By hydrocarbonaceous feedstream, it is meant a primarily hydrocarbon material obtained or derived from crude petroleum oil, from tar sands, from coal liquefaction, shale oil and hydrocarbon synthesis. Thus, hydrocarbonaceous feedstreams suitable for treatment with the present invention include those feedstreams boiling from the naphtha boiling range to heavy feedstocks, such as gas oils and resids, and also those derived from Fischer-Tropsch processes. Typically, the boiling range will be from 40°C to 1000°C. Non-limiting examples of suitable feedstreams include vacuum gas oils; distillates including naphtha, diesel, kerosene, and jet fuel; heavy gas oils, raffinates, lube oils, etc.

Hydrocarbonaceous boiling range feedstreams suitable for treatment with the present invention include, among other things, nitrogen and sulfur contaminants. Typically, the nitrogen content of such streams is 50 to 1000 wppm nitrogen, preferably 75 to 800 wppm nitrogen, and more preferably 100 to 700 wppm nitrogen. The nitrogen appears as both basic and non-basic nitrogen species. Non-limiting examples of basic nitrogen species may include quinolines and substituted quinolines, and non-limiting examples of non-basic nitrogen species may include carbazoles and substituted carbazoles. The sulfur content of the hydrocarbonaceous boiling range feedstream will generally range from 50 wppm to 7000 wppm, more typically from 100 wppm to 5000 wppm, and most typically from 100 to 3000 wppm. The sulfur will usually be present as organically bound sulfur. That is, as sulfur compounds such as simple aliphatic, naphthenic, and aromatic mercaptans, sulfides, di- and polysulfides and the like. Other organically bound sulfur compounds include the class of heterocyclic sulfur compounds such as thiophene, tetrahydrothiophene, benzothiophene and their higher homologs and analogs. The hydrocarbonaceous feedstreams suitable for use herein also contain aromatics, which are typically present in an amount ranging from 0.05 wt.%, to 2.5 wt.%, based on the hydrocarbonaceous boiling range feedstream.

Preferred feedstocks suitable for treatment with the present invention are wax-containing feeds that boil in the lubricating oil range, typically having a 10% distillation point greater than 650°F (343°C) and an endpoint greater than 800°F (426°C), measured by ASTM D 86 or ASTM 2887. These feedstocks can be derived from mineral sources, synthetic sources, or a mixture of the two. Non-limiting examples of suitable lubricating oil feedstocks include those derived from sources such as oils derived from solvent refining processes such as raffinates, partially solvent dewaxed oils, deasphalted oils, distillates, vacuum gas oils, coker gas oils, slack waxes, foots oils and the like, dewaxed oils, automatic transmission fluid feedstocks, and Fischer-Tropsch waxes. Automatic transmission fluid ("ATF") feedstocks are lube oil feedstocks having an initial boiling point between 200°C and 275°C, and a 10% distillation point greater than 300°C. ATF feedstocks are typically 75-110N feedstocks.

These feedstocks may also have high contents of nitrogen- and sulfur-contaminants. Feeds containing up to 0.2 wt.% of nitrogen, based on feed and up to 3.0 wt.% of sulfur can be processed in the present process. Feeds having a high wax content typically have high viscosity indexes of up to 200 or more. Sulfur and nitrogen contents may be measured by standard ASTM methods D5453 and D4629, respectively.

As stated above, the present invention is suitable in hydrotreating processes. It should be noted that the term "hydrotreating" as used herein refers to processes wherein a hydrogen-containing treat gas is used in the presence of a suitable catalyst that is primarily active for the removal of heteroatoms, such as sulfur, and nitrogen, and saturation of aromatics. If the present invention is employed in a hydrotreating process, a hydrocarbonaceous feedstream is contacted with the stacked bed catalyst system in a reaction stage operated under effective hydrotreating conditions. By effective hydrotreating conditions, it is meant those conditions effective at removing at least a portion of the sulfur contaminants from the hydrocarbonaceous feedstream. Effective hydrotreating conditions generally include temperatures of from 150 to 400°C, a hydrogen partial pressure of from 1480 to 20786 kPa (200 to 3000 psig), a space velocity of from 0.1 to 10 liquid hourly space velocity (LHSV), and a hydrogen to feed ratio of from 89 to 1780 m³/m³ (500 to 10000 scf/B).

The contacting of the hydrocarbonaceous feedstock with the stacked bed hydrotreating catalyst system produces a hydrotreated effluent comprising at least a gaseous product and a hydrotreated hydrocarbonaceous feedstock. The hydrotreated effluent is stripped to remove at least a portion of the gaseous product from the hydrotreated effluent. The means used to strip the hydrotreated effluent can be selected from any stripping method, process, or means known can be used. Non-limiting examples of suitable stripping methods, means, and processes include flash drums, fractionators, knock-out drums, steam stripping, etc.

The above description is directed to preferred embodiments of the present invention.

The following examples will illustrate the improved effectiveness of the present invention, but is not meant to limit the present invention in any fashion.

### EXAMPLES

### EXAMPLE 1

A medium vacuum gas oil having the properties outlined in Table 1 was processed in an isothermal pilot plant over three catalysts systems at 1200 psig (8.27 MPag) hydrogen partial pressure. The catalyst systems and operating conditions are given in Table 2. Catalyst B is a conventional hydrotreating catalyst having 4.5 wt.% Group VIB metal, 23 wt.% Group VIII metal on an alumina support and has an average pore size of 14.0 nm. The bulk metal hydrotreating catalyst was a commercial bulk metal hydrotreating catalyst marketed under the name Nebula by Akzo-Nobel.

In the Examples, all the catalyst systems were lined out at 50 days on stream. A first order kinetic model with an activation energy of 31,000 cal/gmol was used to compare volume activities between the catalysts.

**TABLE 1**

| | **Medium Vacuum Gas Oil** |
|---|---|
| Density at 70°C (g/cc) | 0.88 |
| Nitrogen (wppm) | 700 |
| Sulfur (wt.%) | 2.6 |
| GCD 5 WT% Boiling Point (°C) | 334 |
| GCD 50 WT% Boiling Point (°C) | 441 |
| GCD 95 WT% Boiling Point (°C) | 531 |

**TABLE 2**

| **Catalyst System** | **100 vol.% Catalyst B** | **100 vol.% Nebula 1** | **50 vol.% Catalyst B followed by 50 vol.% Nebula 1** |
|---|---|---|---|
| Average Catalyst Temperature (°C) | 370 | 380 | 370 |
| Liquid Hourly Space Velocity (hr⁻¹) | 2 | 1 | 1 |
| Stripped reactor Effluent Nitrogen Content (wppm) | 227 | 17 | 34 |
| Nitrogen Removal Relative Volume Activity | 1 | 1.18 | 1.34 |

The Nitrogen Removal Relative Volume Activity ("RVA") for each catalyst system was calculated by simple first order kinetic modeling. As shown in Table 2, the 50/50 vol.% stacked bed catalyst system, with the large average pore size Catalyst B upstream of the bulk metal catalyst, showed higher nitrogen removal activity than either of the single catalyst systems demonstrated on their own.

### EXAMPLE 2

The hydrotreating ability of different stacked beds of Catalyst C and Nebula were analyzed by hydrotreating different feedstreams over the stacked beds in the in two parallel reactor trains of the same isothermal pilot plant unit used in Example 1 above. The feedstreams used were Medium Cycle Oils("MCO") from an FCC unit and blends of the MCO with a virgin feedstock were tested in two parallel reactor trains. The feed properties are described in Table 3, below.

In this Example, one reactor train consisted entirely of a conventional NiMo on Alumina hydrotreating catalyst, Catalyst C, with an average pore diameter of 7.5 nm. The other reactor train contained a stacked bed system with 75-vol. % of Catalyst C followed by 25-vol. % of Catalyst A, a bulk multimetallic sulfide catalyst having an average pore diameter of 5.5 nm.

The separate reactors in both trains were immersed in a fluidized sandbath for efficient heat transfer. Thus, the temperature of the first 75-vol. % of Catalyst C was at the same temperature whether it was in train 1 or 2. Likewise, the last 25-vol. % of Catalyst C in train 1 was at the same temperature as the last 25-vol. % of Catalyst A in train 2. Therefore, In Example 2, each of the two reactor trains was divided into two separate reactor vessels where the temperature of the first 75-volume% containing 75 vol.% of the catalyst loading of that reactor could be independently controlled from the last 25-volume % of catalyst.

The operating conditions for the two trains were 1350 psig (9.31 MPag) H₂, liquid hourly space velocities ("LHSV") of 1.4 vol./hr/vol., and 5500-6300 SCF/B (980 - 1120 m³/m³)of hydrogen. The temperature schedule for both trains is described in Table 4 below.

**TABLE 3**

| **FEED** | **50% Normal FCC MCO** | **67% Normal FCC MCO** | **100% Normal FCC MCO** | **100% Heavy FCC MCO** |
|---|---|---|---|---|
| API Gravity | 18.1 | 15.0 | 9.5 | 7.0 |
| Hydrogen, wt.% | 10.65 | 10.04 | 8.77 | 8.61 |
| Sulfur, wt.% | 3.23 | 3.53 | 4.28 | 4.40 |
| Nitrogen, ppm | 959 | 1153 | 1485 | 1573 |
| Aromatics-Mono, wt.% | - | - | 12.0 | 8.8 |
| Aromatics-Di, wt.% | - | - | 43.9 | 41.7 |
| Aromatics-Poly, wt.% | - | - | 22.4 | 30.7 |

| **Distillation, D2887 GCD** | | | | |
|---|---|---|---|---|
| 10 | 498 | 493 | 485 | 493 |
| 50 | 627 | 625 | 618 | 642 |
| 90 | 703 | 705 | 706 | 749 |
| 95 | 726 | 721 | 724 | 777 |

**TABLE 4**

| **Days on Oil** | **Feedstock** | **75%/25% Temperatures, °F** |
|---|---|---|
| 4-6 | 50% FCC MCO | 585/650 (307/343 °C) |
| 7-15 | 67% FCC MCO | 585/650 (307/343 °C) |
| 16-30 | 100% FCC MCO | 585-610/650-675 (307-321/343-357 °C) |
| 31-50 | 100% Heavy FCC MCO | 610-635/675-700 (321-335/357-371 °C) |

The relative HDN volume activity of the stacked bed Catalyst C/Catalyst A compared to Catalyst A is shown in the figure below. Note that for the 50%, 67% and 100% FCC MCO feeds the stacked bed system with only 25-volume % of Catalyst A shows a stable activity advantage of 275%.

As shown in the Figure, when the 100% Heavy FCC MCO was used as the feed note the activity advantage for the stacked bed catalyst system containing begins to decrease from 275% to 225% and then was subsequently reduced over 20 days to slightly less than 150%.

### EXAMPLE 3

In this Example, a stacked bed catalyst system containing 75 vol.% of Catalyst B and 25 vol.% Nebula, both as described above, was used to hydrotreat a light cycle cat oil feed ("Feed A") and a heavier medium cycle cat oil feed ("Feed B") as described in Table 5 below. Example 2 was conducted in the same two reactor train pilot plant unit as described in Example 2 above. The operating conditions for the two trains were 1200 psig (8.27 MPag) H₂, liquid hourly space velocities of 2 vol./hr/vol., and 5000 SCF/B (890 m³/m³) of hydrogen.

The reactor effluents were stripped with nitrogen in an oven at 100°C to remove substantially all of the gaseous reaction products. The nitrogen content of the liquid reactor effluent was then analyzed by ASTM 4629. The temperature schedules for both trains along with the results of this example are described in Table 5 below.

**TABLE 5**

| **FEED** | **Feed A** | **Feed B** |
|---|---|---|
| API Gravity | 0.973 | 0.9 |
| Sulfur, wt.% | 2.6 | 2.50 |
| Nitrogen, ppm | 713 | 742 |
| | | |

| **Distillation, D2887 GCD** | | |
|---|---|---|
| 5 | 427 | 448 |
| 50 | 551 | 590 |
| 95 | 707 | 755 |
| EP | 764 | 823 |
| | | |
| Catalyst B Temperature | 570 | 617 |
| Nebula Temperature | 645 | 692 |
| Stripped Reactor Effluent | | |
| Nitrogen Content | 2 | 7 |
| Nitrogen Removal Relative | | |
| Volume Activity | 1.75 | 1.75 |

As can be seen in Table 5, when a conventional catalyst having an average pore diameter of 14 nm was used in the first 75 vol.% of the reactor, the Nitrogen Removal Relative Volume Activity ("RVA") for the catalyst system remained constant when the heavier feed was used. In comparing the results of Example 3 to those obtained in Example 2, one can see that when a catalyst having a pore volume of 7.5 nm preceded the bulk metal catalyst, the RVA of the catalyst system decreased. However, in Example 3, the heavier feed did not negatively impact the RVA of the catalyst system.

## Claims

1. A stacked bed catalyst system suitable for use in hydrotreating a hydrocarbonaceous feedstock, the stacked bed catalyst system comprising:
a) at least one first catalyst selected from hydrotreating catalysts comprised of at least one Group VIII metal and at least one Group VIB metal on a high surface area support material, and having an average pore diameter of greater than 10 nm as measured by water adsorption porosimetry; and
b) at least one second catalyst selected from bulk metal hydrotreating catalysts, wherein the catalyst system comprises 40-95 vol.% of the first hydrotreating catalyst with the second hydrotreating catalyst comprising the remainder;
and wherein the second catalyst is located downstream of the first catalyst in relation to flow of the feedstock.

2. The stacked bed catalyst system according to claim 1 wherein said first hydrotreating catalyst is selected from supported hydrotreating catalysts comprising 2 to 20 wt.% of at least one Group VIII metal, and 5 to 50 wt.% of at least one Group VIB metal on a high surface area support material having an average pore diameter of greater than 10 nm.

3. The stacked bed catalyst system according to any of the preceding claims wherein said Group VIII metal is selected from Co, Ni, and mixtures thereof, said Group VIB metal is selected from Mo, W, and mixtures thereof, and said high surface area support material is selected from silica, alumina, and mixtures thereof.

4. The stacked bed catalyst system according to any of the preceding claims wherein said second catalyst is a bulk metal hydrotreating catalyst comprising 30 to 100 wt.% of at least one Group VIII non-noble metal and at least one Group VIB metal, based on the total weight of the bulk catalyst particles, calculated as metal oxides and wherein the bulk catalyst particles have a surface area of at least 10 m²/g.

5. The stacked bed catalyst system according to any of the preceding claims wherein said bulk metal hydrotreating catalyst comprises one Group VIII non-noble metal and two Group VIB metals wherein the molar ratio of Group VIB to Group VIII non-noble metals ranges from 10:1 - 1:10.

6. The stacked bed catalyst system according to any of the preceding claims wherein the at least one Group VIII non-noble metal and at least one Group VIB metals are present as oxidic compounds of the corresponding metals, or if the catalyst composition has been sulfided, sulfidic compounds of the corresponding metals.

7. The stacked bed catalyst system according to any of the preceding claims wherein the bulk metal hydrotreating catalysts have a surface area of at least 50 m²/g, a pore volume of 0.05 to 5 ml/g, and a median diameter of at least 50 nm.

8. The stacked bed catalyst system according to any of the preceding claims wherein said first hydrotreating catalyst has an average pore diameter of greater than 11 nm.

9. The stacked bed catalyst system according to claim 8 wherein said first hydrotreating catalyst has an average pore diameter of greater than 12 nm.

10. The stacked bed catalyst system according to any of the preceding claims wherein the catalyst system of the present invention comprises 40-60 vol.% of the first catalyst with the second hydrotreating catalyst comprising the remainder.

## Patentansprüche

1. Stapelbettkatalysatorsystem, das für die Verwendung in der Hydrobehandlung von Kohlenwasserstoffeinsatzmaterial geeignet ist, wobei das Stapelbettkatalysatorsystem umfasst:
(a) mindestens einen ersten Katalysator ausgewählt aus Hydrobehandlungskatalysatoren, die aus mindestens einem Gruppe VIII Metall und mindestens einem Gruppe VIB Metall auf einem Trägermaterial mit großer Oberfläche bestehen, und mit einem durchschnittlichen Porendurchmesser größer als 10 nm, gemessen durch Wasseradsorptionsporosimetrie, und
(b) mindestens einen zweiten Katalysator ausgewählt aus Massenmetallhydrobehandlungskatalysatoren,
wobei das Katalysatorsystem 40 - 95 Vol.-% des ersten Hydrobehandlungskatalysators umfasst und der zweite Hydrobehandlungskatalysator den Rest ausmacht, und
wobei der zweite Katalysator stromabwärts von dem ersten Katalysator in Bezug auf den Fluss des Einsatzmaterials angeordnet ist.

2. Stapelbettkatalysatorsystem nach Anspruch 1, bei dem der erste Hydrobehandlungskatalysator aus trägergestützten Hydrobehandlungskatalysatoren ausgewählt ist, die 2 bis 20 Gew.-% mindestens eines Gruppe VIII Metalls und 5 bis 50 Gew.-% mindestens eines Gruppe VIB Metalls auf einem Trägermaterial mit großer Oberfläche und einem durchschnittlichen Porendurchmesser größer als 10 nm umfassen.

3. Stapelbettkatalysatorsystem nach einem der vorhergehenden Ansprüche, bei dem das Gruppe VIII Metall aus Co, Ni und Mischungen derselben ausgewählt ist, das Gruppe VIB Metall aus Mo, W und Mischungen derselben ausgewählt ist und das Trägermaterial mit großer Oberfläche aus Siliciumdioxid, Aluminiumoxid und Mischungen derselben ausgewählt ist.

4. Stapelbettkatalysatorsystem nach einem der vorhergehenden Ansprüche, bei dem der zweite Katalysator ein Massenmetallhydrobehandlungskatalysator ist, der 30 bis 100 Gew.-% mindestens eines unedlen Gruppe VIII Metalls und mindestens ein Gruppe VIB Metall umfasst, bezogen auf das Gesamtgewicht der Massenkatalysatorteilchen, berechnet als Metalloxide, und bei dem die Massenkatalysatorteilchen eine Oberfläche von mindestens 10 m²/g aufweisen.

5. Stapelbettkatalysatorsystem nach einem der vorhergehenden Ansprüche, bei dem der Massenmetallhydrobehandlungskatalysator ein unedles Gruppe VIII Metall und zwei Gruppe VIB Metalle umfasst, wobei das Molverhältnis von Gruppe VIB zu unedlen Gruppe VIII Metallen im Bereich von 10:1 bis 1:10 liegt.

6. Stapelbettkatalysatorsystem nach einem der vorhergehenden Ansprüche, bei dem das mindestens eine unedle Gruppe VIII Metall und das mindestens eine Gruppe VIB Metall als oxidische Verbindungen der entsprechenden Metalle oder, wenn die Katalysatorzusammensetzung sulfidiert worden ist, als sulfidische Verbindungen der entsprechenden Metalle vorliegen.

7. Stapelbettkatalysatorsystem nach einem der vorhergehenden Ansprüche, bei dem die Massenmetallhydrobehandlungskatalysatoren eine Oberfläche von mindestens 50 m²/g, ein Porenvolumen von 0,05 bis 5 ml/g und einen medianen Durchmesser von mindestens 50 nm aufweisen.

8. Stapelbettkatalysatorsystem nach einem der vorhergehenden Ansprüche, bei dem der erste Hydrobehandlungskatalysator einen durchschnittlichen Porendurchmesser größer als 11 nm aufweist.

9. Stapelbettkatalysatorsystem nach einem der vorhergehenden Ansprüche, bei dem der erste Hydrobehandlungskatalysator einen durchschnittlichen Porendurchmesser größer als 12 nm aufweist.

10. Stapelbettkatalysatorsystem nach einem der vorhergehenden Ansprüche, bei dem das Katalysatorsystem der vorliegenden Erfindung 40 - 60 Vol.-% des ersten Katalysators umfasst, wobei der zweite Hydrobehandlungskatalysator den Rest umfasst.

## Revendications

1. Système catalyseur à lit empilé approprié pour être utilisé en hydrotraitement d'une charge de départ hydrocarbonée, le système catalyseur à lit empilé comprenant :
a) au moins un premier catalyseur choisi parmi les catalyseurs d'hydrotraitement constitués d'au moins un métal du groupe VIII et d'au moins un métal du groupe VIB sur un matériau support de surface spécifique élevée, et ayant un diamètre moyen des pores tel que mesuré par porosimétrie par adsorption d'eau de plus de 10 nm ; et
b) au moins un second catalyseur choisi parmi les catalyseurs d'hydrotraitement métalliques massifs,
le système catalyseur comprenant 40-95 % en volume du premier catalyseur d'hydrotraitement, le second catalyseur d'hydrotraitement constituant le reste ;
et le second catalyseur étant situé en aval du premier catalyseur par rapport à la circulation de la charge de départ.

2. Système catalyseur à lit empilé selon la revendication 1, le premier catalyseur d'hydrotraitement étant choisi parmi les catalyseurs d'hydrotraitement supportés comprenant 2 à 20 % en poids d'au moins un métal du groupe VIII et 5 à 50 % en poids d'au moins un métal du groupe VIB sur un matériau support de surface spécifique élevée ayant un diamètre moyen des pores de plus de 10 nm.

3. Système catalyseur à lit empilé selon l'une quelconque des revendications précédentes, ledit métal du groupe VIII étant choisi parmi Co, Ni et les mélanges de ceux-ci, ledit métal du groupe VIB étant choisi parmi Mo, W et les mélanges de ceux-ci et ledit matériau support de surface spécifique élevée étant choisi parmi la silice, l'alumine et les mélanges de celles-ci.

4. Système catalyseur à lit empilé selon l'une quelconque des revendications précédentes, ledit second catalyseur étant un catalyseur d'hydrotraitement métallique massif comprenant 30 à 100 % en poids d'au moins un métal non noble du groupe VIII et au moins un métal du groupe VIB, par rapport au poids total des particules de catalyseur massif, en termes d'oxydes métalliques et les particules de catalyseur massif ayant une surface spécifique d'au moins 10 m²/g.

5. Système catalyseur à lit empilé selon l'une quelconque des revendications précédentes, ledit catalyseur d'hydrotraitement métallique massif comprenant un métal non noble du groupe VIII et deux métaux du groupe VIB, le rapport molaire des métaux du groupe VIB au métal non noble du groupe VIII allant de 10:1 à 1:10.

6. Système catalyseur à lit empilé selon l'une quelconque des revendications précédentes, l'au moins un métal non noble du groupe VIII et l'au moins un métal du groupe VIB étant présents sous forme de composés oxydés des métaux correspondants ou, si la composition de catalyseur a été sulfurée, de composés sulfurés des métaux correspondants.

7. Système catalyseur à lit empilé selon l'une quelconque des revendications précédentes, les catalyseurs d'hydrotraitement métalliques massifs ayant une surface spécifique d'au moins 50 m²/g, un volume des pores de 0,05 à 5 ml/g et un diamètre médian d'au moins 50 nm.

8. Système catalyseur à lit empilé selon l'une quelconque des revendications précédentes, ledit premier catalyseur d'hydrotraitement ayant un diamètre moyen des pores de plus de 11 nm.

9. Système catalyseur à lit empilé selon la revendication 8, ledit premier catalyseur d'hydrotraitement ayant un diamètre moyen des pores de plus de 12 nm.

10. Système catalyseur à lit empilé selon l'une quelconque des revendications précédentes, le système catalyseur de la présente invention comprenant 40-60 % en volume du premier catalyseur, le second catalyseur d'hydrotraitement constituant le reste.
